**Europäisches Patentamt**

**European Patent Office**

**Office européen des brevets**

(19)

(11) Numéro de publication: **0 066 892**
**A1**

(12) # DEMANDE DE BREVET EUROPEEN

(21) Numéro de dépôt: **82105059.8**

(51) Int. Cl.³: **A 41 H 3/02,** G 03 B 27/10

(22) Date de dépôt: **09.06.82**

(30) Priorité: **10.06.81 CH 3788/81**
**10.06.81 CH 3789/81**

(43) Date de publication de la demande: **15.12.82**
**Bulletin 82/50**

(84) Etats contractants désignés: **DE FR GB IT NL**

(71) Demandeur: **Vasson, Paulette, 25, Place de la Gare,**
**CH-2800 Délémont (CH)**

(72) Inventeur: **Vasson, Paulette, 25, Place de la Gare,**
**CH-2800 Délémont (CH)**

(74) Mandataire: **Büchel, Kurt F., Dr., Austrasse 4,**
**FL-9490 Vaduz (LI)**

(54) **Installation pour héliographier des chablons.**

(57) Une table héliographique (1) pour des chablons de confection est équipée d'un chariot (12), dans lequel sont disposés une bobine (11) pour le matériau sensible à la lumière (18) et un noyau d'enroulement (17). En synchronisme avec le mouvement du chariot (12) le long de la table (1), le matériau sensible à la lumière (18) est transporté au-dessus des chablons (plan 10) et enroulé sur le noyau d'enroulement (17). Il est préférable de déplacer en synchronisme au chariot (12) un chariot d'éclairage (28).

EP 0 066 892 A1

ACTORUM AG

## Installation pour héliographier des chablons

La présente invention a trait à une installation pour héliographier des chablons, en particulier des chablons pour la fabrication de vêtements de confection, disposés dans un plan défini par un cadre et présentant sur un de ses bords un emplacement pouvant recevoir une installation d'éclairage de préférence mobile, ainsi qu'un dispositif pouvant recevoir une réserve de matériau sensible à la lumière et permettant de dérouler ce matériau afin de le placer sur la face opposée à l'installation d'éclairage des chablons disposés sur ledit plan.

Une telle table héliographique est décrite par exemple dans la DE-OS 2.735.019. L'emplacement du papier héliographique, - souvent du matériau Diazo - l'exposition de celui-ci, l'enlèvement du papier et la préparation de la prochaine exposition représente plusieurs opérations manuelles entraînant une perte de temps et des risques de dérangements.

Le but de la présente invention est de réduire le nombre d'opérations et par là de permettre un travail plus rapide et plus sûr. Selon l'invention, ce but est atteint par le fait que le dispositif pouvant recevoir une réserve de matériau sensible à la lumière présente la forme d'un support de bobine disposé sur un chariot déplaçable le long d'une piste de la table héliographique, la bobine étant apte à recevoir un rouleau de matériau sensible à la lumière pouvant être transféré par l'intermédiaire d'un dispositif d'entraînement sur un dispositif d'enroulement se trouvant sur le chariot mobile le long de la table héliographique, un dispositif de synchronisation étant prévu pour le mouvement du chariot et l'entraînement du matériau sensible à la lumière, ou vice-versa. Il en résulte que tout au moins le positionnement du matériau sensible à la lumière est simplifié et peut se faire plus vite et avec

- 2 -

0066892

plus de sécurité. Dans l'exécution la plus simple d'une telle table héliographique, le chariot peut être déplacé manuellement le long de la table héliographique. Pour garantir, en particulier sur des tables longues, que le chariot se déplace exactement parallèlement à l'axe longitudinal de la table, il est prévu, selon une exécution avantageuse, de disposer un guidage à colonne pour le chariot le long du bord de la table, agissant sur le cadre par un dispositif de guidage. Il est connu que des guidages à colonnes permettent l'obtention d'une précision de guidage élevée. (Au lieu de déplacer le chariot dans un mouvement longitudinal, il est aussi possible de le déplacer perpendiculairement en plusieurs mouvements).

Une autre simplification de la manutention peut être atteinte par le fait qu'on prévoit un autre dispositif de synchronisation pour le mouvement du chariot portant le matériau sensible à la lumière et de l'installation d'éclairage mobile, car grâce à cela il est possible d'effectuer avec un seul mouvement le positionnement du papier héliographique, son exposition et son enlèvement. Dans le plus simple des cas, ce dispositif de synchronisation peut être formé par une liaison mécanique rigide, disposée entre le chariot portant le matériau sensible à la lumière et l'installation d'éclairage, de sorte que selon une exécution avantageuse, le chariot porte même l' installation d'éclairage, ce qui revient à dire que le papier héliographique et l'installation sont disposés dans un seul boîtier.

Là cependant, où cette construction n'est pas possible par exemple pour des raisons de place, le dispositif de synchronisation peut être constitué par des moyens de traction, par exemple sous forme d'un câble ou d'une chaîne, disposé entre le chariot portant le matériau sensible à la lumière et l'installation d'éclairage. Une autre possibilité réside dans le fait que tant le chariot

- 3 -

0066892

portant le matériau sensible à la lumière, que l'installation d'éclairage mobile, sont équipés de dispositifs d'entraînement individuels et que le dispositif de synchronisation présente un circuit électronique de réglage pour les deux dispositifs d'entraînement. Des dispositifs de synchronisation de ce genre sont connus pour les systèmes d'entraînement de machines à papier, ou pour la synchronisation de films cinématographiques et bandes magnétiques. Il est également possible de prévoir les deux dispositifs d'entraînement sous forme d'entraînement à pas, par exemple de moteur pas-à-pas et de prévoir le dispositif de synchronisation sous forme d'un générateur de cadence contrôlant les deux dispositifs d'entraînement. Bien que des entraînements à pas de ce genre puissent aussi être réalisés à l'aide d'encliquetage magnétique, les moteurs pas-à-pas s'y prêtent particulièrement bien, car ils peuvent sans autre marcher continuellement, sans que la relation rigide entre les impulsions provenant du générateur de cadence et les pas ne se perde. Dans ce genre de construction, les indicateurs de positions (comparant la valeur de consigne à la valeur réelle) habituellement nécessaires dans les dispositifs de synchronisation électronique, peuvent être supprimés.

Une construction particulièrement simple et fiable pour un chariot pour une table héliographique selon l'invention est réalisable en ce qu'il est constitué comme chariot mobile le long de la table héliographique à l'aide de roues, dont au moins une est reliée au dispositif de synchronisation. Ce dernier peut être réalisé par des engrenages reliant les roues du chariot mobile le long de la table héliographique et le dispositif d'entraînement du matériau sensible à la lumière à l'intérieur du chariot. Le dispositif de synchronisation peut cependant aussi comprendre un détecteur de mouvement pour l'avance du papier et un dispositif électronique de comparaison et de réglage.

0066892

Ci-dessus, il a déjà été mentionné que ce genre de dispositifs de synchronisation est bien connu dans divers domaines de la technique. De plus, il est aussi possible de prévoir en plus du dispositif d'entraînement pour l'installation d'enroulement, respectivement de l'avance du matériau, un dispositif d'entraînement additionnel pour le chariot, et de prévoir que le dispositif de synchronisation présente un générateur de cadence commun pour le réglage synchrone des divers dispositifs d'entraînement.

A ce point, il faut noter que le dispositif d'entraînement pour l'installation d'enroulement peut être analogue à celui d'avance du matériau et peut être identique aux dispositifs de ce genre utilisés dans les magnétophones. Pour le cas où l'on ne prévoit qu'un seul dispositif d'entraînement pour l'installation d'enroulement, il faut d'une part considérer que la vitesse circonférentielle augmente avec la grandeur de la bobine, même pour une vitesse d'entraînement constante, mais que d'autre part des variations de vitesse pour des petites différences de diamètre de bobines ne sont pas grandes et peuvent facilement être compensées, (tel qu'il est connu dans les constructions de dictaphones avec mini-cassettes). Il est cependant indiqué, particulièrement en cas de différences marquées des diamètres des bobines, de prévoir un cabestan et d'équiper le chariot d'un dispositif de pression et/ou d'entraînement se trouvant sur le côté opposé du matériau sensible à la lumière dans le plan des chablons. Ce dispositif pouvant, par exemple, présenter la forme de rouleau, pressant d'une part le matériau sensible à la lumière contre le plan des chablons, l'un au moins de ces rouleaux devant être conçu comme rouleau entraîneur. (On peut aussi imaginer des constructions présentant des rubans de transport et de compression pour le matériau sensible à la lumière le long dudit plan). Il est également possible de prévoir des constructions à cabestan doubles, dans lesquelles l'axe avant règle la vitesse d'entraînement tandis que l'autre axe détermine par sa vitesse inférieure ou même inverse, la tension du matériau sensible à la lumière.

Pour garantir une synchronisation parfaite, il est prévu, dans une autre exécution, d'équiper le dispositif de synchronisation du mouvement du chariot le long de la table héliographique avec le dispositif d'entraînement du matériau d'un rouleau à dents ou à goupilles pénétrant le matériau sensible à la lumière, afin d'obtenir une parfaite synchronisation entre le chariot d'une part et le matériau et/ou la trajectoire du chariot.

D'autres détails de l'invention ressortent de la description ci-dessous du dessin illustrant schématiquement une exécution possible de celle-ci.

La figure 1 montre une table héliographique selon l'invention en représentation raccourcie, partiellement en coupe,

la figure 2 montre la table légèrement agrandie du côté de la commande, partiellement en coupe,

la figure 3 montre une partie des moyens selon l'invention en perspective,

la figure 4 montre une autre partie des moyens selon l'invention, vue de dessous, et

la figure 5 montre une coupe schématique à travers une table héliographique et un chablon équipés des moyens selon l'invention.

Une table héliographique 1 selon l'invention repose sur une armature 2 et peut être pivotée autour d'un axe longitudinal 3. A cette fin, l'axe 3 peut être entraîné par un moteur non représenté à l'aide d'une roue 4.

La table 1 présente outre les boîtiers d'engrenage 5 à 8 un cadre 9 (voir fig, 2) définissant un plan 10, sur lequel les chablons de confection sont positionnés. Pour ce travail, l'inclinaison de la table 1 autour de l'

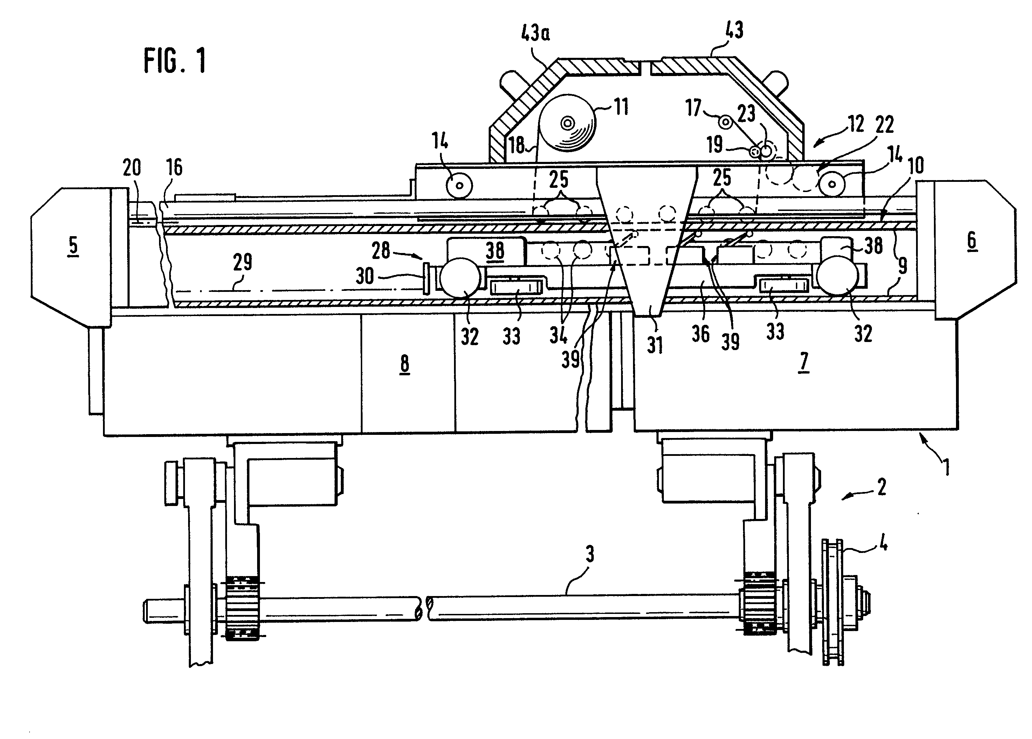

axe longitudinal 3, (voir fig. 1) est particulièrement indiquée et avantageuse.

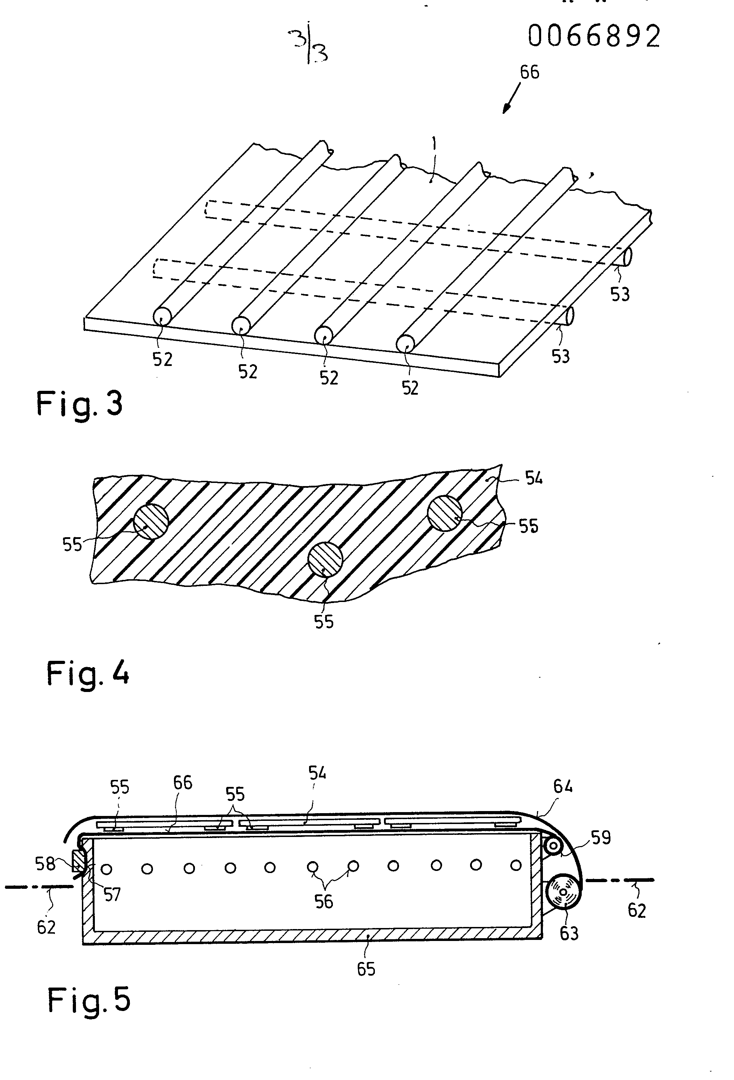

Ainsi qu'il ressort de la figure 3, le phénomène d'attraction naturel entre deux matières peut avantageusement être mis en oeuvre pour atteindre le but de la présente invention si à la surface du support 51 de la table héliographique est associé un réseau de fils de fer ou de fils en acier 52, 53 et si les chablons 54 sont équipés d'aimants 55, ainsi que ceci ressort de la figure 4.

Il est évident qu'il existe un grand nombre de possibilités de réalisations techniques tant pour la surface de support 51 qui peut être un verre armé d'un réseau de fils 52, 53, une feuille synthétique transparente sur les deux faces desquelles sont fixés des fils 52, 53 ou même une feuille transparente en verre ou matière synthétique portant un réseau de lignes magnétiques ou magnétisables imprimées ou collées sur l'une de ses surfaces.

Les aimants 55 associés aux chablons 54 peuvent être des plaquettes synthétiques contenant par exemple des particules en ferrite de barium ou des aimants métalliques. Ils peuvent être collés aux surfaces inférieures ou supérieures des chablons.

A part ces solutions magnétiques, il est possible d'utiliser une surface de support par exemple en forme d'une feuille synthétique présentant une charge statique considérable et d'associer aux chablons des feuillettes synthétiques semblables, étant attirés par la feuille formant le support. Bien entendu, il est même possible de découper les chablons eux-mêmes dans une telle feuille synthétique.

Dans une autre variante d'application de l'invention, il est possible d'utiliser une surface de support traditionnelle en verre et des chablons équipés ou fait de matière synthétique adhérant au verre.

Par l'emploi de surfaces de support en feuilles synthétiques, il est possible d'alléger considérablement la construction de la table héliographique, de sorte qu'il est possible de prévoir un mécanisme simple permettant d'incliner la surface de support comme par exemple pour les planches à dessin. Ceci offre la possibilité qu'une seule personne peut facilement positionner tous les chablons nécessaires sur l'ensemble de la surface de support. D'autre part, il est aussi possible de se servir d'une feuille synthétique transparente indépendante pouvant être placée sur une table héliographique une fois les chablons montés sur cette feuille.

Il s'est avéré avantageux, dans la solution magnétique, de prévoir un réseau rectangulaire de fils d'acier zingué de 0,7mm de diamètre ou plus sur une feuille de polyéthylène de haute pression d'une épaisseur de 0,5mm ou plus tirée sur un tambour chauffé ou à travers une fente chauffée entre deux tambours afin de souder les deux nappes de fils sur la feuille.

De préférence, les fils du réseau sont écartés les uns des autres de 15 à 35 mm. En utilisant des aimants d'un diamètre d'au moins 20% supérieur à la distance entre les fils sur les chablons et en disposant ces aimants à des distances entre eux d'environ 20 à 40 mm, un positionnement parfait des chablons peut être atteint.

L'homme du métier est sans autre capable de réaliser d'autres variantes de support et de prévoir d'autres fixations adéquates des aimants aux chablons. Il ne va pas non plus rencontrer des difficultés dans le choix des matières pour les autres réalisations de l'invention. Que ceci soit des réalisations se servant du fait que deux matières synthétiques présentant des charges statiques opposées s'attirant ou des réalisations se servant d'un adhésif à grand nombre d'utilisations.

Pour tendre le réseau 66 où l'on tire profit de la rigidité naturelle du fil de fer en le repliant simplement aux bords de la table 65 ou on utilise un mécanisme de tension comme illustré aux deux formes d'exécution. A ce sujet, un bout du réseau 66 est serré dans une rainure 57 au moyen d'une baguette 58 à l'aide d'un dispositif de pinçage non représenté qui presse la baguette 58 vers le fond de la rainure 57.

L'autre bout du réseau 66 peut être fixé d'une manière non représentée sur un rouleau de tension pouvant être tourné manuellement, par exemple à l'aide d'un levier (non représenté), dans le sens des aiguilles d'une montre après avoir pincé le premier bout au moyen de la baguette 8 afin de tendre le réseau 66, ce rouleau étant retenu par un cliquet d'arrêt ou un dispositif similaire non représenté.

Quand le réseau 66 est monté sur la table 55, les chablons 54 y sont posés, dont seulement trois sont représentés sur la figure 4. Chaque chablon a des feuilles ou lames aimantés 55 collés à la surface inférieure à l'aide desquels il est fixé au réseau de fils de fer 66. Le positionnement des chablons 54 peut être encore facilité si la table 65 est tournée autour de son axe longitudinal 62 et est ainsi inclinée ou bien mise en position verticale. Ceci est possible à cause de la fixation sur aimant selon l'invention par laquelle en position verticale tout déplacement des chablons 54 est évité.

Ensuite on entreprend le travail de tirage photographique de copies des chablons ainsi disposés. A cette fin, le matériau sensible à la lumière est prévu sous forme de bande en papier, et se trouve selon l'invention sur une bobine 11 à l'intérieur du chariot 12. Il va sans dire qu'à l'intérieur du chariot 12, un dispositif de suspension pour la bobine 11 doit être prévu.

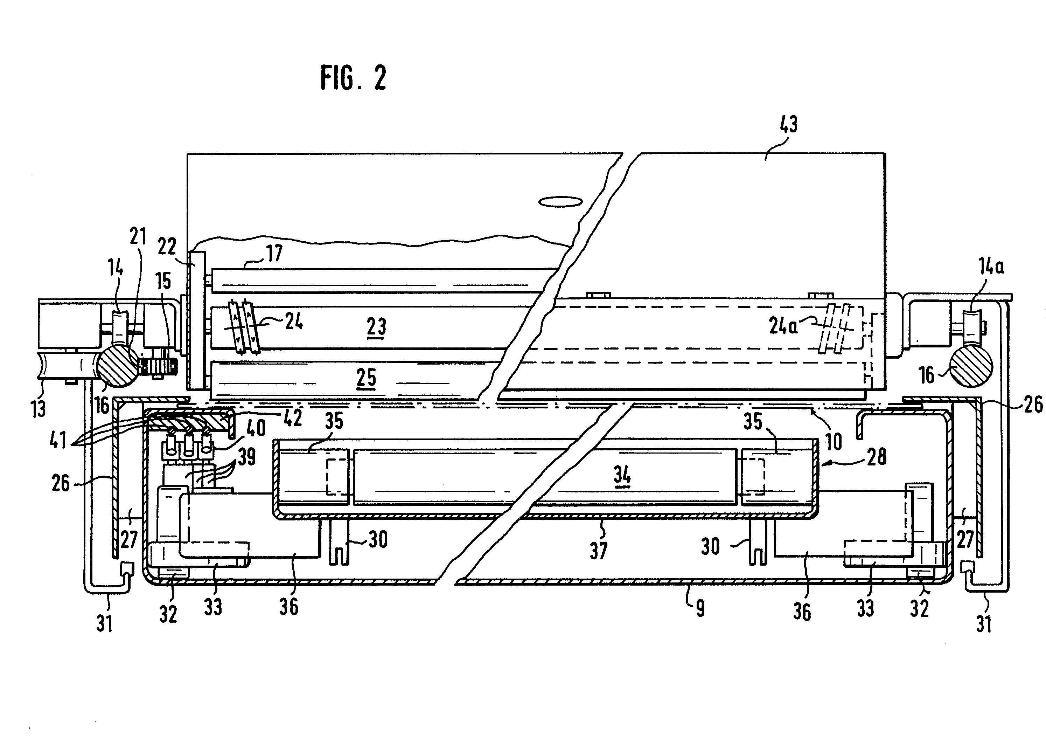

Le chariot 12 pourrait simplement être déplaçable à la main le long du cadre 9. Dans l'exécution représentée au dessin, il présente cependant un nombre de roues 13, 14. 14a et 15 (voir fig. 2), dont à la figure 1 seules les roues 14 sont représentées afin de faciliter sa compréhension. A l'aide des roues 13 à 15, le chariot 12 est conçu comme chariot mobile pouvant se déplacer le long d'une piste de la table 1, définie par des guidages à colonnes 16.

Par le mouvement de la table 1 le long du guidage à colonnes 16, le matériau sensible à la lumière est déroulé en synchronisme avec la bobine 11, déposé au-dessus du réseau et des chablons, exposé de la manière décrite ci-dessous et enfin enroulé sur le noyau d'enroulement 17.

A cette fin, plusieurs constructions sont possibles: une des roues 13-15 peut être conçue comme détecteur de mouvement du chariot 12 par lequel un moteur d'entraînement du noyau d'enroulement 17 reçoit un signal de réglage. Il faut cependant considérer que lors du déroulement du matériau sensible à la lumière 17 de la bobine 11, celle-ci devient toujours plus petite, tandis que la bobine sur le noyau 17 devient toujours plus grande. Ceci peut être considéré dans le réglage par détection des grandeurs des bobines par exemple. Il est cependant plus simple d'obtenir une avance régulière du matériau par l'utilisation d'un axe de cabestan 19, entraîné en synchronisme avec le mouvement du chariot.

Une autre possibilité consiste à utiliser des moteurs pas-à-pas pour l'entraînement du cabestan et l'entraînement du chariot et de les régler à l'aide d'un générateur de cadence commun. Dans l'exécution représentée, le chariot 12 est cependant entraîné par un engrenage disposé dans le boîtier 5 à l'aide d'une chaîne 20. Le mouvement du chariot est transmis à la roue 15 (fig. 2), ayant la forme d'une roue dentée engrenant avec une crémaillère disposée à l'intérieur de la colonne de guidage 16, ainsi qu'il ressort schématiquement de la figure 1, ce mouvement est ensuite transmis à une bobine à aiguilles 23 par l'intermédiaire d'un engrenage 22.

La bobine à aiguilles 23 (voir figs. 1 et 2) remplit une double fonction. D'une part elle doit garantir un
engrènement fixe avec le matériau sensible à la lumière 18
(pour autant que celui-ci ne présente pas de perforation
latérale dans le genre des films, auquel cas la bobine à
aiguilles serait à remplacer par un rouleau denté). D'autre
part, il ressort de la figure 2 que l'axe 24 respectivement
24a, des diverses couronnes à aiguilles est incliné par
rapport à la direction d'entraînement, ainsi que cela est
connu dans l'industrie textile. Ainsi, dans cette application, on obtient un lissage du matériau sensible à la lumière dans le sens latéral, afin de garantir un enroulement
sans plis. L'inclinaison des axes 24, 24a est représentée
d'une manière exagérée à la figure 2 et est tellement faible en pratique qu'une déchirure du matériau aux endroits
des trous perforés par les aiguilles ne se produit pas sur
le petit parcours sur lequel le matériau 18 est en contact
avec la bobine 23.

Afin de disposer le matériau sensible à la lumière à plat sur les chablons placés dans le plan 10, il faut
prévoir une installation de compression. Celle-ci peut
être formée par exemple de ressorts à lames, repliés à
leurs bords et disposés longitudinalement. Dans l'exécution
représentée, elle est cependant formée par 6 rouleaux 25.
Ces rouleaux peuvent, éventuellement au lieu de l'axe de
cabestan 19, être entraînés tout au moins en partie. De
cette manière il est possible d'obtenir que le rouleau 25
disposé le plus près du noyau d'enroulement 17, règle la
vitesse d'avance du matériau sensible à la lumière, et
que les autres rouleaux 25 ne soient pas entraînés, entraînés à une vitesse inférieure, ou même en sens inverse, ainsi que cela est connu des entraînements à cabestan doubles
dans les magnétophones, servant à étirer le matériau 18

- 11 -

0066892

dans le sens longitudinal. Dans le cas où six rouleaux sont utilisés, il est possible de prévoir plusieurs combinaisons. Ainsi on peut prévoir d'entraîner outre le premier rouleau, chaque deuxième et de laisser les rouleaux intermédiaires tourner à vide.

Il doit être noté que dans le cas de l'entraînement du matériau 18 par un axe de cabestan 19, ou d'au moins un rouleau 25, le noyau d'enroulement 17 est entraîné par un embrayage glissant, car - ainsi que déjà dit - son diamètre et par là sa vitesse circonférentielle augment. L'avance ne doit cependant être définie que par le mouvement du chariot 12.

Ainsi qu'il ressort de la figure 2, le réseau dans le plan 10 est pincé à l'aide de fixations 26. Ces dernières sont montées sur le cadre 9 à l'aide de séparateurs 27, de manière non représentée.

En-dessous du plan 10 un chariot d'éclairage 28 est prévu qui est entraîné en synchronisme avec le chariot 12 à l'aide d'un engrenage à chaîne, disposé à l'intérieur du boîtier 5, et d'une chaîne 29 dans le boîtier 6. A cette fin, les chaînes 20, 29 par exemple, engrènent avec deux roues à chaînes de même dimension, ensuite passent par les boîtiers 8, 7 et 6 et retournent du côté arrière du chariot 12, respectivement du chariot d'éclairage 28. La chaîne 29 (en fait une chaîne 29 est fixée de chaque côté du chariot) est fixée au côté avant du chariot d'éclairage à l'aide d'un tenon 30. Bien entendu il est possible de synchroniser par d'autres moyens le mouvement du chariot d'éclairage 28 avec celui du chariot 12. Pour le cas où le chariot 28 aurait un moteur d'entraînement individuel, on peut se servir des possibilités de réglages et synchronisation électroniques décrites ci-dessus au sujet de la synchronisation du mouvement du chariot et de l'avance du matériau, telles qu'elles sont connues dans d'autres domaines de la technique.

Le cadre 9 peut cependant aussi être équipé sur son côté inférieur (voir fig. 2) d'une entaille ou être ouvert et être relié avec le chariot d'éclairage 28 par une liaison mécanique rigide (voir pièce 21).

Il est cependant aussi possible de prévoir que le cadre 9 soit ouvert sur son côté de sorte que les chariots 12 et 28 puissent être réunis dans une seule unité constructive.

Dans le cas illustré cependant, le cadre 9 sous forme d'un profilé ouvert sert aussi de guidage pour le chariot d'éclairage 28. La table 1 est inclinable autour de son axe longitudinal 3, de sorte qu'il est nécessaire également pour le chariot 12, de le supporter avec ses roues 13 et 15 latéralement, comme c'est le cas pour le chariot d'éclairage 28. Pour cette raison, ce dernier porte, à part les quatre roues 32, également des roues latérales 33. Le chariot d'éclairage porte un nombre de tubes d'éclairage 34, montés dans des montures 35 (fig. 2). Ces dernières sont fixées à un support de lampe en forme de cuvette, relié à un cadre du chariot 36. La mise sous tension se fait par des bobines d'impédance 38, placées aux deux extrémités du chariot 28, lesquelles sont reliées au réseau électrique par des balais 29. Ainsi qu'il ressort de la figure 2, ces derniers sont déplacés latéralement et coopèrent par leurs éléments 40, chacun avec un des conducteurs électriques 41, montées sur des isolateurs 42, placés sur la face inférieure du bord replié du cadre 9. Les trois conducteurs électriques 41 peuvent, par exemple, correspondre aux trois phases d'un réseau à courant alternatif. De même manière, il est possible de relier un moteur du chariot 28 au réseau électrique, si ce chariot est équipé d'un moteur séparé. Pour le cas où un moteur pas-à-pas est utilisé, il pourrait être relié au générateur de cadence commun aux chariots 12 et 28. Bien entendu, les impulsions d'un générateur de cadence commun

0066892

peuvent être modifiées, si d'autres moteurs sont utilisés. Etant donné qu'un mouvement synchrone des chariots 12 et 28 est important, ce sont surtout des moteurs présentant de bonnes propriétés de marche régulières, ainsi que le font les moteurs synchrones et asynchrones qui se prêtent à une telle application.

Aussitôt que le chariot 12 a traversé toute la longueur de la table 1, l'exposition du matériau sensible à la lumière est terminée et ce dernier est enroulé autour du noyau d'enroulement 17. Il suffit d'ouvrir le couvercle correspondant 43, respectivement 43a du chariot 12, d'en retirer la bobine exposée, et éventuellement d'y placer une nouvelle bobine 11.

Particulièrement dans le cas où le chariot 12 et le chariot d'éclairage 28 sont reliés mécaniquement entre eux ou forment une unité, le chariot 28 peut présenter en face des rouleaux 25, des contre-rouleaux, afin de garantir un bon fonctionnement du matériau sensible à la lumière 18 sur le réseau, respectivement sur les chablons disposés sur le plan 10. Ceci est surtout indiqué si au moins un des rouleaux 25 est entraîné pour l'avance du matériau.

Bien que l'engrenage servant à actionner le noyau d'enroulement ne soit pas représenté au dessin, l'homme du métier reconnaît facilement qu'il doit le construire comme ceux utilisés dans les magnétophones ou d'autres appareils à bandes. Ainsi, la bobine 11 n'est normalement pas entraînée, mais peut l'être dans le cas de tension élevée dans le matériau. Si cependant la tension du matériau sensible à la lumière 18 dans le sens longitudinal est trop faible, il peut être avantageux d'entraîner la bobine 11 en sens inverse par un embrayage à glissement doux.

Dans le cadre de l'invention, une pluralité d'

0066892

exécutions est possible. Ainsi, la bobine à aiguilles peut être remplacée par un rouleau présentant des élévations inclinées par rapport à son axe longitudinal.

0066892

## REVENDICATIONS

1. Installation pour héliographier des chablons, en particulier des chablons pour la fabrication de vêtements de confection, disposés dans un plan défini par un cadre et présentant sur un de ses bords un emplacement pouvant recevoir une installation d'éclairage de préférence mobile, ainsi qu'un dispositif pouvant recevoir une réserve de matériau sensible à la lumière et permettant de dérouler ce matériau afin de le placer sur la face opposée à l'installation d'éclairage des chablons disposés sur ledit plan, caractérisée en ce que le dispositif pouvant recevoir une réserve d'un matériau sensible à la lumière (18) présente la forme d'un support de bobine disposé sur un chariot déplaçable (12) le long d'une piste de la table héliographique (1), la bobine (11) étant apte à recevoir un rouleau de matériau sensible à la lumière (18) pouvant être transféré par l'intermédiaire d'un dispositif d'entraînement sur un dispositif d'enroulement (17) se trouvant sur le chariot mobile (12) le long de la table héliographique et qu'un dispositif de synchronisation (22) est prévu pour le mouvement du chariot et l'entraînement du matériau sensible à la lumière, ou vice-versa.

2. Installation selon la revendication 1, caractérisée en ce que pour une table (1) inclinable autour de son axe longitudinal, des guidages latéraux (13, 15) pour le chariot (12) sont prévus.

3. Installation selon la revendication 1 ou 2, caractérisée en ce qu'un dispositif additionnel de synchronisation (5, 20, 29) pour le mouvement du chariot (12) portant le matériau sensible à la lumière (18), avec le chariot d'éclairage mobile (28) est prévu.

0066892

4.      Installation selon la revendication 3, caractérisée en ce que le dispositif additionnel de synchronisation (5, 20, 29) est constitué par des moyens de traction (20, 29), par exemple sous forme de câble ou chaîne, disposés entre le chariot (12) du matériau sensible à la lumière (18) et le chariot d'éclairage mobile (28).

5.      Installation selon la revendication 3, caractérisée en ce que des dispositifs d'entraînement sont prévus pour le chariot (12), pour le matériau sensible à la lumière (18) et pour le chariot d'éclairage mobile (28), et que le dispositif additionnel de synchronisation comprend un circuit électronique de réglage pour les deux dispositifs d'entraînement.

6.      Installation selon l'une des revendications 1 à 5, caractérisée en ce que le chariot (12) présente au moins un balai (39) coopérant avec au moins un conducteur électrique disposé le long de la piste du chariot (12) servant à relier au réseau électrique le dispositif d'entraînement du matériau, l'entraînement du chariot (12) et/ou le chariot d'éclairage (28).

7.      Installation selon l'une des revendications 1 à 6, caractérisée en ce qu'elle présente notamment si la table (1) est inclinée, des roues (14, 14a, 13, 15) s'appuyant suivant deux directions inclinées l'une par rapport à l'autre.

8.      Installation selon l'une des revendications 1 à 7, caractérisée en ce que le dispositif de synchronisation est formé par au moins une roue (15) du chariot (12) déplaçable sur la table (1) et le dispositif d'entraînement (19, 23) pour le transport du matériau à l'intérieur du chariot (12).

9.     Installation selon l'une des revendications 1 à 7, caractérisée en ce que le dispositif de synchronisation comprend un détecteur de mouvement pour le mouvement du chariot (12) et un détecteur de mouvement pour l'avance du papier, ainsi qu'une installation électronique de comparaison et de réglage.

10.     Installation selon l'une des revendications 1 à 9, caractérisée en ce que du côté du matériau sensible à la lumière (18) opposé au plan (10) des chablons, une installation de pression et/ou d'avance (25) du matériau sensible à la lumière est prévue, formée d'un assemblage de galets épousant les déformations de la plaque transparente.

11.     Installation selon la revendication 10, caractérisée en ce que l'installation de pression et/ou d'avance (25) présente plusieurs rouleaux disposés l'un derrière l'autre dans la direction d'avance.

12.     Installation selon l'une des revendications 1 à 11, caractérisée en ce que le chariot (12) porte également l'installation d'éclairage (34).

13.     Installation selon la revendication 1 comportant des moyens pour le positionnement temporaire des chablons sur le plan de travail d'une table héliographique, caractérisée en ce que la surface de support de la table héliographique est associée à une ou plusieurs matières exerçant une force d'attraction sur une ou plusieurs matières associées aux chablons devant être positionnés sur ladite surface de support.

14.     Installation selon la revendication 13, caractérisée en ce que ces moyens comprennent un réseau de lignes rectangulaires en matière magnétique ou magnétisable asso-

- 18 - 0066892

cié à la surface de support et des pièces en matière magnétisable ou magnétique associées à la surface inférieure ou supérieure des chablons.

15. Installation selon la revendication 14, caractérisée en ce que le réseau est un réseau de fils de fer ou d'acier (52, 53) et que les pièces sont en une matière agglomérée contenant des particules de ferrite de barium et présentent une surface autocollante servant à leur fixation aux chablons.

16. Installation selon la revendication 14 ou 15, caractérisée en ce que l'espace entre les fils ou lignes du réseau est d'environ de 10 mm à 40 mm et que les pièces (55) présentent un diamètre au moins 20% supérieur à cet espace.

17. Installation selon la revendication 13, caractérisée en ce que ces moyens comprennent une surface de support (52) en matière synthétique présentant une charge statique et une matière synthétique présentant une charge statique de polarisation opposée incorporée dans les chablons (54).

18. Installation selon la revendication 13, caractérisée en ce que ces moyens comprennent une couche en matière adhésive à utilisations multiples apposée sur une surface de support (5) et/ou les chablons (54).

FIG. 1

0066892

# FIG. 2

66

Fig. 3

Fig. 4

Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-2 919 636  (O. KRON)<br><br>* colonne 4, lignes 28-75; colonnes 5,6, en entier; colonne 7, alinéa 1; figures 4-8 *<br><br>--- | 1,10, 12 | A 41 H    3/02<br>G 03 B   27/10 |
| A | DE-C- 904 857  (METEOR APPARATEBAU PAUL SCHMECK)<br>* page 1, lignes 29-38; page 2, lignes 1-42; revendications 1-6; figures *<br><br>--- | 1,12 | |
| A | BE-A- 471 346  (G. ROSSINI)<br>* pages 2,3, en entier; revendications; figures *<br><br>--- | 1,12 | |
| A | DE-A-2 030 639  (M.D. PAPIERVEREDELUNG)<br>* en entier *<br><br>--- | 13,14 | **DOMAINES TECHNIQUES RECHERCHES (Int. Cl. 3)** |
| A | FR-A-1 409 770  (KALLE AKTIENGESELLSCHAFT)<br>* en entier *<br><br>--- | 13,17 | A 41 H<br>G 03 B |
| A | MANUFACTURING CLOTHIER, vol.59, no.5, mai 1978, Londres (GB)<br>M. DISHER: "Lay planning - The simpler systems", pages 49-55 *<br>page 55, colonne 1, paragraphe 3 *<br><br>---<br><br>-/- | 13,17 | |

Le présent rapport de recherche a été établi pour toutes les revendications

| Lieu de la recherche | Date d'achèvement de la recherche | Examinateur |
|---|---|---|
| LA HAYE | 10-09-1982 | GARNIER F.M.A.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

# RAPPORT DE RECHERCHE EUROPEENNE

**Office européen des brevets**

| | DOCUMENTS CONSIDERES COMME PERTINENTS | | |
|---|---|---|---|
| | | | Page 2 |
| Catégorie | Citation du document avec indication, en cas de besoin, des parties pertinentes | Revendication concernée | CLASSEMENT DE LA DEMANDE (Int. Cl. ³) |
| A | DE-A-2 649 980  (A. BRUNO)<br>* en entier * | 18 | |
| A | FR-A-2 019 104  (H. HAUS) | | |
| A | FR-A-1 327 858  (A. DESILLE) | | |
| A | US-A-2 427 923  (SPAULDING-MOSS COMP.) | | |
| A | GB-A- 977 365  (EASTMAN KODAK COMP.) | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 10-09-1982 | GARNIER F.M.A.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82